# EUROPÄISCHE PATENTSCHRIFT

(11) **EP 1 179 269 B1**
(45) Veröffentlichungstag und Bekanntmachung des Hinweises auf die Patenterteilung: **23.01.2008**
(21) Anmeldenummer: 00938560.0
(22) Anmeldetag: 18.05.2000
(51) Int. Cl.: H04Q 7/22

(54) **VERFAHREN UND ANORDNUNG ZUR STEUERUNG VON ANLAGEN UND/ODER PROZESSEN UNTER MITVERWENDUNG VON MOBILKOMMUNIKATIONSNETZEN**
METHOD AND ARRANGEMENT FOR CONTROLLING FACILITIES AND/OR PROCESSES ADDITIONALLY USING MOBILE COMMUNICATION NETWORKS
PROCEDE ET DISPOSITIF POUR COMMANDER DES INSTALLATIONS ET/OU DES PROCESSUS EN UTILISANT CONJOINTEMENT DES RESEAUX DE COMMUNICATION MOBILES

(30) Priorität: 18.05.1999 DE 19922667
(43) Veröffentlichungstag der Anmeldung: 13.02.2002
(73) Patentinhaber: T-Mobile Deutschland GmbH, 53227 Bonn (DE)
(72) Erfinder: BRUNE, Peter, D-53340 Meckenheim (DE); FEUSER, Ulrike, D-53173 Bonn (DE); LJUNGSTRÖM, Patrik, D-53639 Königswinter (DE); MICHEL, Uwe, D-53604 Bad Honnef (DE); MOHRS, Walter, D-53123 Bonn (DE); PTACEK, Wolfgang, D-53604 Bad Honnef (DE)
(74) Vertreter: Riebling, Peter
(86) Internationale Anmeldenummer: PCT/DE2000/001557
(87) Internationale Veröffentlichungsnummer: WO 2000/070892

(56) Entgegenhaltungen:
- EP-A- 0 645 941
- WO-A-97/19568
- WO-A-97/41654
- US-A- 5 351 235
- US-A- 5 752 188

## Beschreibung

Die Erfindung betrifft ein Verfahren und eine Anordnung zur Steuerung von Anlagen und /oder Prozessen, bei dem Teile eines vorhandenen Mobilkommunikationsnetzes mitverwendet werden. Es werden dabei zusätzlich zu der durch Standards festgelegten Funktionsweise des Mobilkommunikationsnetzes Steuerungsinformationen und Signalinformationen über Teile des Mobilkommunikationsnetz übertragen, um Sonderanwendungen im Sinne der Erfindung durchführen zu können.

Das hier näher betrachtete Gebiet im Umfeld der Erfindung sind die Steuerung von Verkaufsautomaten durch den Automatenbenutzer oder auch die Fernwartung oder Fern-Messdatenübertragung von zu überwachenden Anlagen. Es sind seit längerem mehr oder weniger erfolgreiche Versuche/Projekte bekannt, die allgemeine GSM-Netzinfrastruktur für Systemlösungen zu verwenden. Insbesondere sind folgende Typen von Anwendungen in der öffentlichen Diskussion:
a.) Micro-payment Lösungen: Ein Mobilfunk-Kunde benutzt seine Mobilstation für bargeldloses Bezahlen. Die Bezahlung erfolgt durch das Absenden eines (authentisierten) Auftrags von der Mobilstation zu einer Micro-payment-Zentrale. Die fälligen Beträge werden entweder im Rahmen der Mobilfunk-Rechnung oder mit einer speziellen Rechnung für alle Micro-payment Vorgänge abgerechnet.
b.) Datenanwendung ohne vollwertige GSM-Subskription: Hierbei handelt es sich überwiegend um Anwendungen im Bereich Überwachung, die nur gelegentlich kleinere Datenmengen übertragen. Für diese Anwendungen ist die Verwendung einer vollwertigen GSM-Subskription, inkl. einer Rufnummer nicht wirtschaftlich. Als Beispiel kann ein Getränke-Verkaufsautomat genannt werden, der beim Unterschreiten eines definierten Füllstands der Getränke den Betreiber zum Nachfüllen auffordert.

zu a.:
   Eine GSM-basierte Micro-payment-Lösung soll folgende Anforderungen erfüllen:
      - Zahlung muss schnell erfolgen
      - Lösung muss zuverlässig sein, sowohl im Bereich Verfügbarkeit/Qualität als auch im Bereich Sicherheit
      - Netzresourcen sollen wenig belastet werden
      - Man-Machine-Interface (MMI) muss einfach sein
      - Verwendung der im Markt befindlichen Endgeräte sollte möglich sein
zu b.:
   Eine Datenanwendung ohne vollwertige GSM-Subskription soll folgende Anforderungen erfüllen:
      - Datenübertragung muss schnell erfolgen
      - Lösung muss zuverlässig sein, sowohl im Bereich Verfügbarkeit/Qualität als auch im Bereich Sicherheit
      - Netzresourcen sollen wenig belastet werden, insbesondere keine Zuteilung von Rufnummern an die mobilen Anwendungen

Für diese vorgenannten Anforderungen ist die Verwendung eines Mobilkommunikationsnetzes im herkömmlichen Sinne nicht zufriedenstellend einsetzbar, da zu viele Netzressourcen belegt werden und dadurch diese Anwendungen nicht wirtschaftlich tragbar sind.

In diesem Zusammenhang beschreibt die US-A-5 752 188 ein Verfahren zum Informationsaustausch unter Mitverwendung eines Mobilkommunikationsnetzes, wobei zwischen den Informationsflüssen innerhalb des GSM-Mobilkommunikationsnetzes und einem dedizierten Netz ein Austausch von Informationen stattfindet, und für den Austausch der Informationen Informationselemente der standardisierten USSD Signalisierungsprotokolle des Mobilkommunikationsnetzes verwendet werden. Hierzu ist in einem Netzelement des Mobilfunknetzes eine USSD Verarbeitungseinrichtung angeordnet, welche USSD Nachrichten empfängt und über eine Übermittlungseinrichtung transparent an das dedizierte Netz weiterleitet.
Da hier die üblichen Netzelemente, wie z.B. MSC/VLR oder HLR, zur Informationsübertragung beansprucht werden, werden die Netzressourcen relativ stark belastet.

Aus der WO-A-97 41654 ist ein Informationsübertragungssystem bekannt, bei dem von verschiedenen Informationsquellen stammende Informationen durch ein Nachrichtenverteilungszentrum entgegengenommen und für Teilnehmer eines Mobilkommunikationsnetzes individuell aufbereitet werden. Die Informationen werden dann mittels Kurznachrichten (SMS) unter Beanspruchung der für die SMS-Übermittlung benötigten Infrastruktur des Mobilkommunikationsnetzes an die Teilnehmer versendet.

Die WO-A-97 19568 betrifft ein mobiles Parksystem für Teilnehmer eines Mobilkommunikationssystems, das auf dem Kurznachrichtendienst (SMS) eines Mobilkommunikationssystems basiert. Zur Nutzung eines kostenpflichtigen Parkplatzes meldet sich der Teilnehmer bei einer Parkplatzverwaltung an und meldet sich bei Verlassen des Parkplatzes ab. Die Meldungen erfolgen durch Eingabe und Absenden einer Kurznachricht SMS. Die angefallenen Parkgebühren werden dann von der Parkplatzverwaltung abgerechnet. Auch hier erfolgt die Versendung der Nachrichten durch Nutzung der für die SMS-Übermittlung benötigten Infrastruktur des Mobilkommunikationsnetzes.

Schließlich offenbart die US-A-5 351 235 ein Verfahren zur Übermittlung von Informationen in einem diensteintegrierenden Kommunikationsnetz, wie z.B. ISDN oder GSM. Hierbei erfolgt ein Informationsaustausch zwischen zwei Endeinrichtungen des Netzwerkes derart, dass die zweite Endeinrichtung auf Anfrage der ersten Endeinrichtung automatisch eine Antwortnachricht generiert und an die erste Endeinrichtung zurücksendet. Die Informationsübermittlung erfolgt unter Verwendung der gesamten Infrastruktur des Kommunikationsnetzes, vorzugsweise z.B. über den Kurznachrichtendienst (SMS).

Aufgabe der Erfindung ist es deshalb, ein Verfahren anzugeben, welches bei den genannten Steuerungsverfahren und Übertragungsverfahren, die mit Hilfe eines Mobilkommunikationsnetzes durchgeführt werden, eine solche technische Lösung bietet, den technischen Gesamtaufwand für diese Anwendungen reduziert und die Netzressourcen möglichst wenig belastet.

Die Lösung dieser Aufgabe wird durch die Merkmale der Patentansprüche 1 bzw. 9 erreicht.

Ausgestaltungen der Lösungsidee sind in den zugehörigen Unteransprüchen angegeben.

Der Vorteil der Erfindung ergibt sich einerseits dadurch, dass durch die teilweise Mitbenutzung eines vorhandenen Mobilkommunikationsnetzes der Investitionsbedarf für die Sonderanwendung geringer als bei einer Alleinlösung ist. Außerdem reduziert sich die Kostenbelastung des Mobilkommunikationsnetzes durch die Zusatznutzung. Bei Verwendung handelsüblicher Endgeräte für die Sonderfunktionen, was anzustreben ist, ist die Akzeptanz beim Nutzer des Mobilkommunikationsnetzes für solche Sonderdienste besonders hoch.

Im folgenden werden Beispiele für die Anwendung der Erfindungsidee angegeben:

Die Kommunikation vom mobilen Endgerät bzw. der entsprechenden Anwendung zum Mobilkommunikationsnetz erfolgt bei Benutzung eines GSM-Netzes unter Verwendung von Informationselementen der standardisierten Signalisierungsprotokolle. Die verwendeten Nachrichten bzw. Informationselemente werden an geeigneten Stellen im GSM-Netz aus der Signalisierung ausgefiltert und in ein dediziertes Netz (z.B. TCP/IP basiert) überführt. In dem dedizierten Netz (im folgenden Anwendungsnetz genannt) werden die Nachrichten/Informationselemente zu einem Anwendungsrechner weitergeleitet. Denkbar ist die Verwendung eines zentralen Anwendungsrechners, der bestimmte Regionen abdeckt oder der für bestimmte Anwendungen zuständig ist. Der Anwendungsrechner kann innerhalb des gleichen Dialogs dem mobilen Endgerät eine Antwort zurück signalisieren.
Darüber hinaus kann der Anwendungsrechner autonom einen Dialog zu dem mobilen Endgerät aufbauen.

Grundsätzlich sind für den Transport vom mobilen Endgerät zum Netz alle Protokollelemente geeignet, die vom Endgerät mit beliebiger Information gefüllt und anschließend zum Netz übertragen werden können.
Besonders geeignet ist die im GSM-Standard vorgesehene Unstructured Supplementary Service Data Prozedur (USSD), die eine rufunabhängige Kommunikation zwischen einem Mobilfunkteilnehmer und dem GSM-Netz ermöglicht.
Im Gegensatz zu dem standardisierten USSD-Ansatz wird hier ein Ausfiltern der USSD-Nachricht aus den Signalisierungsfluss an geeigneten Stellen vorgeschlagen.

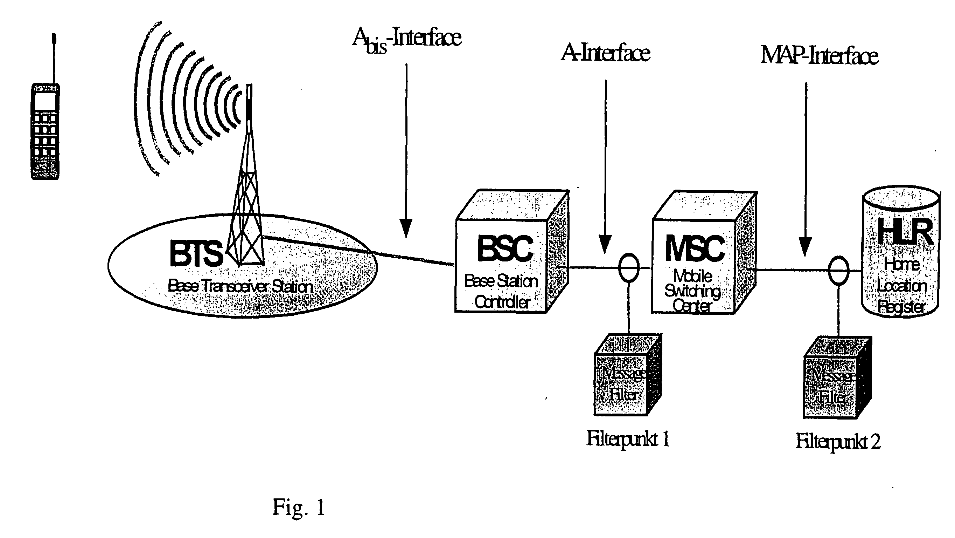

**Figur 1** zeigt die prinzipielle Anordnung.

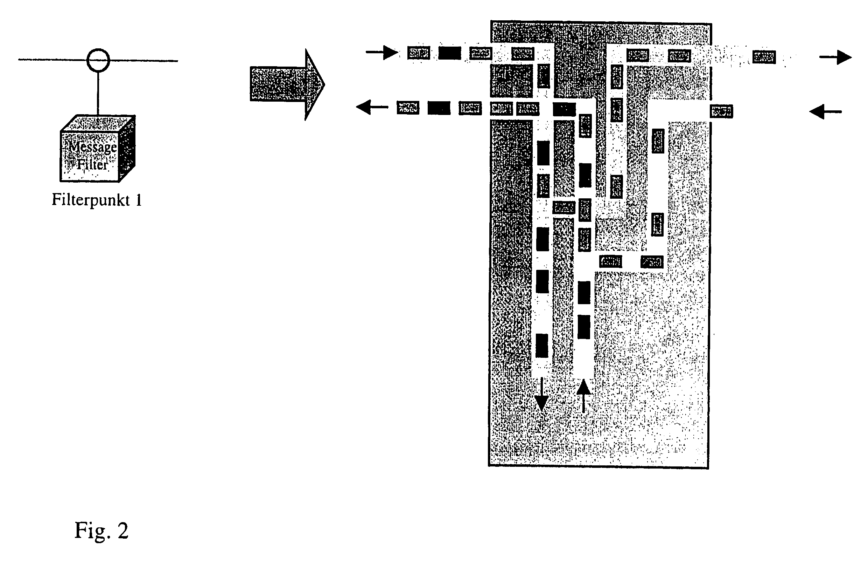

An den Filterpunkten wird der Signalisierungsfluss nicht transparent weitergeleitet sondern die betroffenen Nachrichten/Informationselemente protokollkonform mit einem Multiplexer ausgefiltert bzw. eingefügt. Diese Aufgabe wird von einem Filter (Message Filter) wahrgenommen, wie es in **Figur 2** dargestellt ist.

Die Filterfunktion muss jedoch nicht auf allen Ebenen des Protokolls erfolgen. So ist es beispielsweise nicht unbedingt notwendig, allgemeine Funktionen wie Identifizierung, Authentifizierung und Verschlüsselung auszufiltern, diese Funktionen können wie üblich durchgeführt werden, um anschließend den authentifizierten Dialog auszufiltern.
Zwei Filterpunkte sind sinnvoll möglich, zum einen auf dem A-Interface und zum anderen auf dem MAP-Interface. Die wesentlichen Merkmale sowie deren Vor- und Nachteile werden im folgenden zusammengefasst:

### A-Interface:

- Minimale Belastung der GSM-Netzinfrastruktur
- Keine unnötigen Zeitverluste durch die Verarbeitungszeiten im Netz
- Ortsbezogene Daten des mobilen Endgeräts verfügbar und kann somit in der Applikation verwendet werden
- Anzahl der A-Interface im Netz ist relativ groß => Anzahl Message Filter groß

### MAP-Interface:

- Filterfunktion greift auch für Teilnehmer die außerhalb des Heimatnetzes roamen
- Relative zu der Anzahl A-Interfaces ist die Anzahl MAP-Interfaces gering

### Gesamtanordnung

Die Anordnung kann, bei entsprechender Installation von Message Filters,
- flächendeckend (an allen A-Interfaces oder an allem MAP-Interfaces zum HLR)
- regional (ausgewählte A-Interfaces)
- IMSI-Bereich abhängig (ausgewählte MAP-Interfaces zum HLR)
aufgebaut und betrieben werden. In allen drei Fällen werden die installierten Message Filter mit einem oder mehreren Anwendungsrechnern via das Anwendungsnetz verbunden. In dem Anwendungsrechner werden die Nachrichten empfangen, ausgewertet, die erforderlichen Aktionen eingeleitet und die entsprechende Rückmeldung zum mobilen Endgerät zurückgesendet.

Anhand von zwei Beispielen wird dies verdeutlicht.

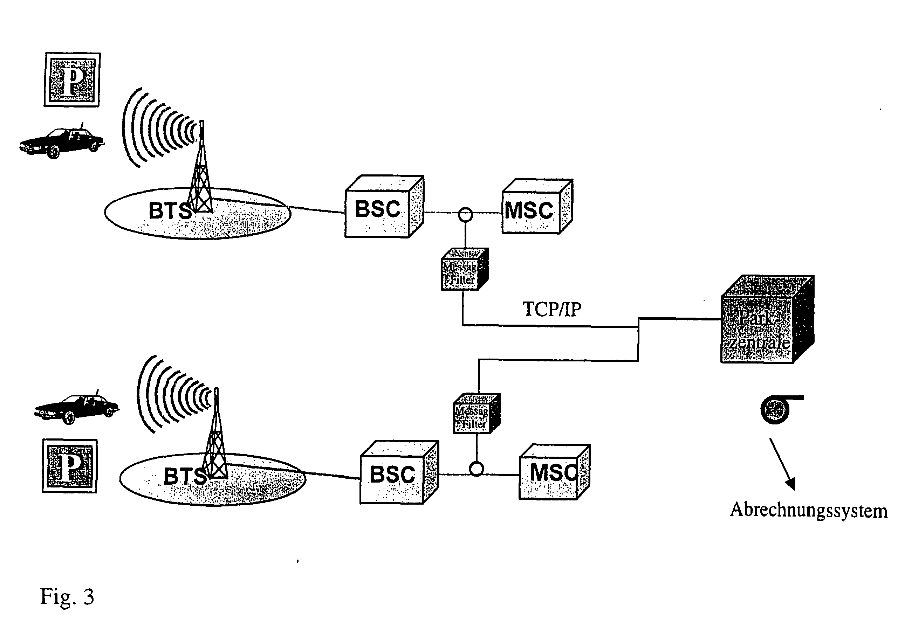

**Figur 3** zeigt die Anwendung der Erfindung auf Einrichtungen und Abläufe auf einem öffentlichen Parkplatz.
Alternativ zum üblichen Entrichten der Parkgebühr am Parkscheinautomat können die Gebühren auch via Mobilfunk entrichtet werden. Hierzu meldet sich der Autofahrer beim Besetzen des Parkplatzes an und meldet sich bei Verlassen wieder ab. Die Meldungen erfolgen durch Eingabe und Absenden einer USSD-Nachricht (Ziffernfolge mit "#" als letztes Zeichen). Die Nachricht beinhaltet eine Ziffernfolge für "Parkplatz: anmelden" bzw. Parkplatz: abmelden" sowie die Parkplatznummer. Die Nachricht wird durch den Message Filter am A-Interface abgefangen und inklusive der IMSI zur Identifikation des Kunden und der Cell-ID zur Ortsbestimmung an den Anwendungsrechner übermittelt.

Die Ortsbestimmung und die übermittelte Parkplatznummer definieren eindeutig einen bestimmten Parkplatz im versorgungsgebiet. Durch die "Anmeldung" wird der betroffene Parkplatz im Anwendungsrechner auf den Status "ordnungsgemäß besetzt" gesetzt. Durch die "Abmeldung" wird der Parkplatz wieder freigegeben, die Parkdauer festgestellt und die fällige Forderung einem Abrechnungssystem (z.B. dem Mobilfunkabrechnungssystem) übermittelt.
Während der Parkdauer können Parkwächter durch Abfrage des Anwendungsrechners feststellen, ob der Parkplatz "ordnungsgemäß besetzt" ist.

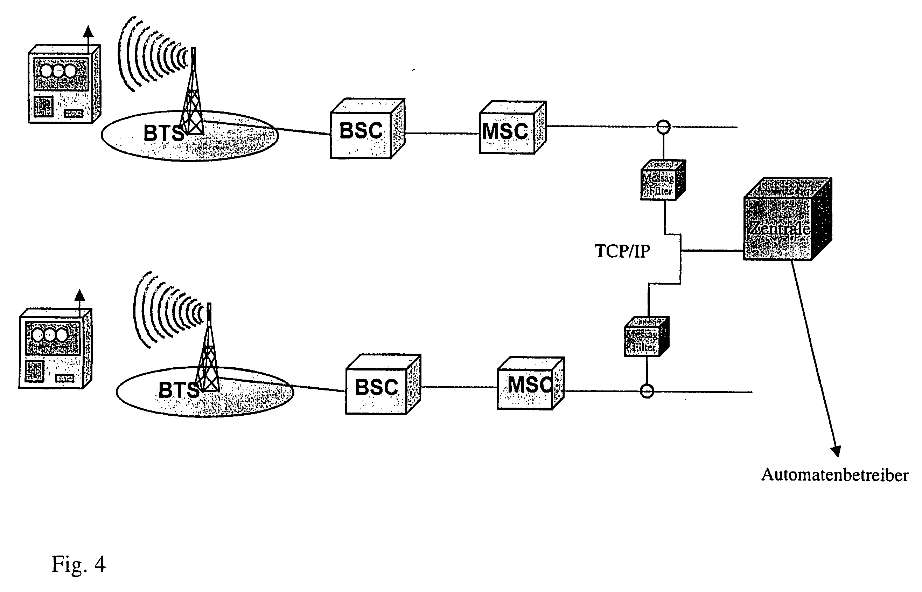

In **Figur 4** wird als weiteres Beispiel die Anwendung der Erfindungsidee auf die Steuerung eines Getränkeautomaten gezeigt.
In (öffentlich) aufgestellten Getränkeautomaten wird ein (vereinfachtes) GSM-Telefon eingebaut. Im Gegensatz zu normalen GSM-Telefonen muss das Gerät nur die USSD-Funktion unterstützen. Prinzipiell kann die verwendete IMSI für andere Automaten/Anwendungen wiederverwendet werden. Die Zuteilung einer Rufnummer (MSISDN) ist nicht notwendig.

Sobald der Füllstand eines Getränks eine vordefinierte Schwelle unterschreitet, versendet der Getränkeautomat eine USSD Nachricht. Die Nachricht beinhaltet einen Kode für die Automatenbetreiber, eine eindeutige Kennung des Automaten sowie einen Kode für das betroffene Getränk. Die Nachricht wird durch das Message Filter auf dem MAP-Interface zum HLR abgefangen und an den Anwendungsrechner übermittelt. Im Anwendungsrechner wird der Automatenbetreiber anhand des Nachrichteninhalt ermittelt und benachrichtigt.

### Sonderfall der Anordnung:

Für den Anwendungsfall "Datenanwendung ohne vollwertige GSM-Subskription" (Beispiel 2) kann auf ein vollwertiges HLR verzichtet werden und statt dessen eine Mini-HLR/AC-Funktion (z.B. Location Update,
SendAuthenticationParameter) in dem Message Filter integriert werden. IMSI können für andere Automaten/Anwendungen wiederverwendet werden. Die Zuteilung einer Rufnummer (MSISDN) ist nicht notwendig.

## Patentansprüche

1. Verfahren zur Steuerung von Anlagen und/oder Prozessen bei dem Teile eines vorhandenen Mobilkommunikationsnetzes mitverwendet werden, wobei zwischen den Informationsflüssen innerhalb des Mobilkommunikationsnetzes und einem dedizierten Netz ein Austausch von Informationen stattfindet, und für den Austausch der Informationen Informationselemente der standardisierten Signalisierungsprotokolle des Mobilkommunikationsnetzes verwendet werden,
**dadurch gekennzeichnet,**
**dass** die betreffenden Informationenelemente an geeigneten Schnittstellen im Mobilkommunikationsnetz nicht transparent weitergeleitet, sondern durch ein Filterverfahren aus der Signalisierung protokollkonform ausgefiltert und in das dedizierte Netz überführt werden, und vom dedizierten Netz kommende Informationselemente protokollkonform in die Signalisierung eingefügt werden.

2. Verfahren nach Anspruch 1, **dadurch gekennzeichnet, dass** der Austausch von Informationen durch das Einfügen von Antwortsignalen in Form von Informationselementen in der Mobiltelekommunikations-Signalisierung erfolgt.

3. Verfahren nach Anspruch 1 oder 2, **dadurch gekennzeichnet, dass** der Inhalt von mindestens einem der genannten Informationselemente von einem an der Mobilkommunikation beteiligten Endgerät festgelegt werden kann.

4. Verfahren nach einem oder mehreren der Ansprüche 1 bis 3, **dadurch gekennzeichnet, dass** als Schnittstelle das A-Interface eines GSM- oder UMTS-Mobilkommunikationsnetzes verwendet wird.

5. Verfahren nach einem oder mehreren der Ansprüche 1 bis 4, **dadurch gekennzeichnet, dass** als Schnittstelle das MAP-Interface eines GSM- oder UMTS-Mobilkommunikationsnetzes verwendet wird.

6. Verfahren nach einem oder mehreren der Ansprüche 1 bis 5, **dadurch gekennzeichnet, dass** bei den ausgetauschten Daten mindestens eine Teilnehmeridentifikation enthalten ist.

7. Verfahren nach einem oder mehreren der Ansprüche 1 bis 6, **dadurch gekennzeichnet, dass** bei den ausgetauschten Daten mindestens eine Ortsinformation enthalten ist.

8. Verfahren nach einem oder mehreren der Ansprüche 1 bis 7, **dadurch gekennzeichnet, dass** der Informationsaustausch über eine Einheit des Mobilkommunikationsnetzes erfolgt, die mindestens die Funktion eines Heimatregisters(Home Location Register) und/oder eines Authentikationszentrums (Authentikation Center) aufweist.

9. Anordnung zur Steuerung von Anlagen und/oder Prozessen wobei für die Übertragung von zugehörigen Informationen Teile eines vorhandenen Mobilkommunikationsnetzes mitverwendet werden, und zwischen Elementen des Mobilkommunikationsnetzes, welche am Informationsfluss innerhalb des Mobilkommunikationsnetzes beteiligt sind, und einem dedizierten Netz Anordnungen zum Austausch von Information zwischen den beteiligten Netzen vorhanden sind, wobei mindestens eine Koppeleinrichtung vorgesehen ist, die einen Informationsaustausch zwischen mindestens einer Stelle des Mobilkommunikationsnetzes und einer Stelle des dedizierten Netzes ermöglicht,
**dadurch gekennzeichnet,**
**dass** die genannte Koppeleinrichtung über Filtereinrichtungen in Form von Message Filtern verfügt, die gezielt direkt oder indirekt Informationselemente aus dem Informationsfluss des Mobilkommunikationsnetzes protokollkonform herauslesen können oder die gezielt direkt oder indirekt Informationselemente in den Informationsfluss des Mobilkommunikationsnetzes protokollkonform hineinfügen oder entsprechende Elemente des Informationsflusses des Mobilkommunikationsnetzes ersetzen können.

10. Anordnung nach Anspruch 9, **dadurch gekennzeichnet, dass** im Mobilkommunikationsnetz als Koppelstelle des Mobilkommunikationsnetzes zum dedizierten Netz eine Einheit vorgesehen wird, die mindestens die Funktion eines Heimatregisters (Home Location Register) und/oder eines Authentikationszentrums (Authentikation Center) aufweist.

## Claims

1. Method for the control of apparatus and/or processes in which parts of an existing mobile communications network are used, an exchange of information taking place between the information flows within the mobile communications network and a dedicated network, and information elements of the standardised signalling protocols of the mobile communications network being used for exchange of the information, **characterised in that** the information elements concerned are not passed on transparently at suitable interfaces in the mobile communications network, but filtered out from the signalling according to protocol by a filter process and transferred to the dedicated network, and information elements coming from the dedicated network are inserted in the signalling according to protocol.

2. Method according to claim 1, **characterised in that** the exchange of information is effected by the insertion of response signals in the form of information elements in the mobile telecommunications signalling.

3. Method according to claim 1 or 2, **characterised in that** the content of at least one of the aforementioned information elements can be stipulated by a terminal participating in mobile communications.

4. Method according to one or more of claims 1 to 3, **characterised in that** the A-interface of a GSM or UMTS mobile communications network is used as the interface.

5. Method according to one or more of claims 1 to 4, **characterised in that** the MAP interface of a GSM or UMTS mobile communications network is used as the interface.

6. Method according to one or more of claims 1 to 5, **characterised in that** in the data exchanged is contained at least one subscriber identification.

7. Method according to one or more of claims 1 to 6, **characterised in that** in the data exchanged is contained at least one item of location information.

8. Method according to one or more of claims 1 to 7, **characterised in that** the exchange of information is effected via a unit of the mobile communications network which has at least the function of a home location register and/or an authentication centre.

9. Arrangement for the control of apparatus and/or processes, parts of an existing mobile communications network being used for the transmission of associated information, and between elements of the mobile communications network which participate in information flow within the mobile communications network, and a dedicated network, there being arrangements for the exchange of information between the participating networks, there being provided at least one coupling device which enables exchange of information between at least one point of the mobile communications network and a point of the dedicated network, **characterised in that** the aforementioned coupling device has filter devices in the form of message filters which can selectively directly or indirectly pick out information elements from the information flow of the mobile communications network according to protocol or which can selectively directly or indirectly insert the information elements in the information flow of the mobile communications network according to protocol or replace corresponding elements of the information flow of the mobile communications network.

10. Arrangement according to claim 9, **characterised in that** in the mobile communications network as the point for coupling the mobile communications network to the dedicated network there is provided a unit which has at least the function of a home location register and/or an authentication centre.

## Revendications

1. Procédé pour commander des installations et/ou des processus, selon lequel on utilise conjointement des éléments d'un réseau de communication mobile existant, étant précisé qu'un échange d'informations a lieu entre les flux d'informations à l'intérieur du réseau de communication mobile et un réseau spécialisé, et qu'on utilise pour cet échange d'informations des éléments d'informations des protocoles de signalisation normalisés du réseau de communication mobile,
**caractérisé en ce que** les éléments d'informations concernés sont transmis, au niveau d'interfaces adéquates prévues dans le réseau de communication mobile, non pas de manière transparente, mais en étant filtrés selon le protocole à partir de la signalisation, grâce à un procédé de filtrage, et sont transférés dans le réseau spécialisé, et les éléments d'informations qui viennent du réseau spécialisé sont intégrés selon le protocole dans la signalisation.

2. Procédé selon la revendication 1, **caractérisé en ce que** l'échange d'informations se fait grâce à l'insertion de signaux de réponse sous forme d'éléments d'informations dans la signalisation de télécommunication mobile.

3. Procédé selon la revendication 1 ou 2, **caractérisé en ce que** le contenu de l'un au moins des éléments d'informations mentionnés peut être fixé par un terminal participant à la communication mobile.

4. Procédé selon l'une au moins des revendications 1 à 3, **caractérisé en ce qu'**on utilise comme interface l'interface A d'un réseau de communication mobile GSM ou UMTS.

5. Procédé selon l'une au moins des revendications 1 à 4, **caractérisé en ce qu'**on utilise comme interface l'interface MAP d'un réseau de communication mobile GSM ou UMTS.

6. Procédé selon l'une au moins des revendications 1 à 5, **caractérisé en ce qu'**au moins une identification d'abonné est contenue dans les données échangées.

7. Procédé selon l'une au moins des revendications 1 à 6, **caractérisé en ce qu'**au moins une information de localisation est contenue dans les données échangées.

8. Procédé selon l'une au moins des revendications 1 à 7, **caractérisé en ce que** l'échange d'informations se fait par l'intermédiaire d'une unité du réseau de communication mobile qui comporte au moins la fonction d'un enregistreur de localisation nominal (Home Location Register) et/ou d'un centre d'authentification (Authentification Center).

9. Dispositif pour commander des installations et/ou des processus, dans lequel pour transmettre des informations associées, on utilise des éléments d'un réseau de communication mobile existant et il est prévu, entre les éléments du réseau de communication mobile qui participent au flux d'informations à l'intérieur dudit réseau et un réseau spécialisé, des dispositifs pour l'échange d'informations entre les réseaux impliqués, et dans lequel il est prévu au moins un dispositif de couplage qui permet un échange d'informations entre au moins un point du réseau de communication mobile et un endroit du réseau spécialisé,
**caractérisé en ce que** le dispositif de couplage dispose de dispositifs de filtrage sous forme de filtres de messages, qui peuvent extraire des éléments d'informations du flux d'informations du réseau de communication mobile, de manière ciblée et selon le protocole, directement ou indirectement, ou qui peuvent insérer des éléments d'informations dans le flux d'informations du réseau de communication mobile, de manière ciblée et selon le protocole, directement ou indirectement, ou qui peuvent remplacer des éléments correspondants du flux d'informations du réseau de communication mobile.

10. Dispositif selon la revendication 9, **caractérisé en ce qu'**il est prévu dans le réseau de communication mobile, comme point de couplage de celui-ci au réseau spécialisé, une unité qui comporte au moins la fonction d'un enregistreur de localisation nominal (Home Location Register) et/ou d'un centre d'authentification (Authentication Centre).
